# EUROPEAN PATENT APPLICATION

(11) **EP 2 512 039 A1**
(43) Date of publication of application: **17.10.2012**
(21) Application number: 10836962.0
(22) Date of filing: 08.07.2010
(51) Int. Cl.: H04B 1/707

(54) **METHOD AND DEVICE FOR REALIZING CHIP CORRELATION OF MULTIPATH SEARCH**

(30) Priority: 16.12.2009 CN 200910254061
(71) Applicant: ZTE Corporation, Shenzhen, Guangdong 518057 (CN)
(72) Inventor: WANG, Baling, Guangdong 518057 (CN); SHI, Yijun, Guangdong 518057 (CN); FENG, Liguo, Guangdong 518057 (CN)
(74) Representative: Patel, Nikesh
(86) International application number: PCT/CN2010/075068
(87) International publication number: WO 2011/072525

(57) **Abstract**

Disclosed in the present invention is are a method and apparatus for implementing chip correlation for multi-path search. The method comprises: writing chip data into a memory array according to the receiving time order of the chip data; reading the chip data, which correlation operation is needed to be carried out on within a current clock period, from the memory array according to a demand of the search; and grouping the chip data which is read out by predetermined grouping manner, and carrying out the correlation operation for each chip group in multiple chip groups and a pseudo-noise (PN) code sequence, wherein the multiple chip groups are obtained by the grouping; the chip data of each chip group in the multiple chip groups are multiple chip data which are received consecutively, the number of the chip data in each chip group is equal to each other, and the second chip data of each chip group is the first chip data in the next chip group according to the receiving time order of the chip data. By way of the present invention, correlation operation with high correlation order can be completed using a small amount of memories, thus memory resources are effectively saved, the costs and hardware complexity are reduced; and the flexibility of correlation operation can be improved; in addition, the purpose of seamless handover can be achieved.

## Description

### Field of the Invention

The present invention relates to the communication field and, particularly, to a method and apparatus for implementing chip correlation for multi-path search.

### Background of the Invention

In a wireless communication system, since the signals reach the receiver end via different propagation paths, they have different propagation delays, which form multi-path fading channels. Currently, an effective method against multi-path fading is to use RAKE receiving, and therefore the uplink baseband processing solutions of the wideband code division multiple access (abbreviated as WCDMA) base station generally use RAKE receiving technology.

When carrying out the RAKE receiving, it first needs to carry out multi-path search via a searcher and then obtain the phase of each multi-path, then each multi-path can be demodulated respectively according to the multi-path phase, and finally merger is carried out thereon, so as to significantly improve the receiving effects.

The multi-path search of the base station is to carry out sliding correlation operation on the received antenna data flow and the local pseudo-noise (abbreviated as PN) code sequence with different phase offsets, and then to compare the accumulated result energy of each phase offset by a certain algorithm, thereby obtaining the phase information of the user data in the antenna data flow. In the uplink of the base station, since the base station needs to communicate with all the terminals which access the mobile network, multi-path search needs to be carried out on a large number of user terminals. At the same time, since the change rate of wireless channel environment is rather fast, the multi-path search is needed to be re-carried out on each user every a period of time, which requires higher real-time performance on multi-path search. Thus, it needs the base station system to complete a large number of correlation operations in unit time, therefore it is critical to design a rational hardware structure to achieve a large number of operations in the multi-user multi-path search work.

However, currently the solution used by high correlation multi-path search generally needs to cache a large number of chip data and needs a large number of independent memories, which significantly increases the chip area costs and the difficulty of backend implementation. For this end, currently still no effective solution has been proposed.

### Summary of the Invention

As to the problem in relevant art that the costs of memories required by the implementation of multi-path search are high and the implementation thereof is hard, the present invention proposes a solution for implementing chip correlation for multi-path search, which is capable of significantly reducing the number of independent memories and the capacity of the memories and reducing the hardware complexity.

According to one aspect of the present invention, a method for implementing chip correlation for multi-path search is provided.

The method for implementing chip correlations for multi-path search comprises: writing a chip data into a memory array according to receiving time order of the chip data; reading the chip data, which correlation operation is needed to be carried out on within a current clock period, from the memory array according to a demand of the search; and grouping the chip data which is read out by a predetermined grouping manner and carrying out correlation operation on each chip group in the multiple chip groups obtained by the grouping and a pseudo-noise (PN) code sequence; wherein the chip data of each chip group in the multiple chip groups are multiple chip data which are received consecutively, the number of the chip data in each chip group is equal to each other, and the second chip data of each chip group is the first chip data in the next chip group according to the receiving time order of the chip data.

In the above, the step of writing a chip data into a memory array according to the receiving time order of the chip data comprises: as to each memory in multiple memories of the memory array, after a chip data is written into a storage location of the memory, writing next received chip data into a storage location in a next memory of the memory, wherein the relevant location of the storage location in the next memory is same as that of the storage location in the memory; and after a chip data is written into a storage location in the last memory of the multiple memories, taking the first memory in the multiple memories as a next memory of the last memory and writing next received chip data into a next storage location of the storage location the relevant location of which is the same in the first memory.

Further, as to each memory in the multiple memories, after the storage space of the memory is filled up, if a new chip data which needs to be stored in the memory is received continuously, then the chip data which is stored earliest in the memory is covered by the new chip data.

Further, the step of reading the chip data which the correlation operation is needed to be carried out on within a current clock period comprises: reading the chip data which the correlation operation is needed to be carried out on within a current clock period from the memory array according to the order of the multiple memories and the order of the storage location in the each memory, wherein within each clock period, one data is read out from each memory in the multiple memories respectively.

Further, the step of grouping the chip data which is read out by a predetermined grouping manner comprises: carrying out two-level cyclic shift on the chip data which is read out, wherein the first level cyclic shift is used for carrying out cyclic shift of E chip on the chip data which is read out, and the second level cyclic shift is used for carrying out cyclic shift of F chip on the chip data after the first level cyclic shift, and S = E x F, wherein S is the total number of chip data which need to be cycled.

Further, the predetermined grouping manner is to group the chip data which the correlation operation is needed to carried out on within the each clock period according to the following formula: Y = m * n, wherein Y is the number of the chip data which the correlation operation is needed to be carried out on within the each clock period, n is the number of groups divided for the chip data processed within each clock period according to the predetermined grouping manner, m is the number of the chip data in each group of chip data, m and n are integral power of 2, and the number of memories in the memory array meets the following condition: x = m + n, wherein x is the number of memories in the memory array.

Further, the step of carrying out correlation operation on the each chip group and the PN code sequence comprises: carrying out complex multiplication on each chip data in the chip group and a corresponding PN code in the PN code sequence to obtain I path data and Q path data of a single-chip, and placing the adding 1 operation in the negating one number and adding 1 operation in the complex multiplication structure into an accumulation operation of a multi-chip; and carrying out multi-chip accumulation on the I path data, and taking the adding 1 operation in the single-chip complex multiplication as a carry bit of an adder in the multi-chip accumulation while carrying out the accumulation; and at the same time carrying out accumulation on the Q path data and taking the adding 1 operation in the single-chip complex multiplication as a carry bit of an adder in the multi-chip accumulation while carrying out the accumulation.

Further, the method for implementing chip correlation can further comprises: in the case that it is determined according to the size of a search window that it is needed to continue to carry out chip correlation in the search window within the next clock period after correlation operation has been carried out on the each chip group and the PN code sequence , taking the next chip data of a designated chip data in the chip data which the correlation operation is carried out on within the current clock period as the first chip data of the first chip group which correlation operation is carried out on within the next clock period, wherein the designated chip data is the first chip data of the last chip group in the multiple chip groups.

According to one aspect of the present invention, an apparatus for implementing chip correlation for multi-path search is provided.

The apparatus for implementing chip correlation for multi-path search according to the present invention comprises: a write module, configured to write a chip data into a memory array according to a receiving time order of the chip data; a memory array, configured to store the chip data written by the write module; a read module, configured to read the chip data, which correlation operation is needed to be carried out on within a current clock period, from the memory array according to a demand of the search; and a correlation processing module, configured to group the chip data which is read out by a predetermined grouping manner and carrying out correlation operation on each chip group in the multiple chip groups obtained by the grouping and a PN code sequence; wherein the chip data of each chip group in the multiple chip groups are multiple chip data which are received consecutively, the number of the chip data in each chip group is equal to each other, and the second chip data of each chip group is the first chip data in the next chip group according to the receiving time order of the chip data.

In the above, the write module is configured to, as to each memory in multiple memories of the memory array, write next received chip data into a storage location in a next memory of the memory, after a chip data is written into a storage location of the memory, wherein the relevant location of the storage location in the next memory is same as that of the storage location in the memory; and after a chip data is written into a storage location in the last memory of the multiple memories, to take the first memory in the multiple memories as a next memory of the last memory and to write next received chip data into a next storage location of the storage location the relevant location of which is the same in the first memory.

In the present invention, by way of grouping the chip data which the correlation operation is needed to be carried out on within one clock period, a small amount of memories can be used to complete the correlation operation, thus the memory resources can be effectively saved, the costs and the hardware complexity can be reduced; moreover. Moreover, due to various grouping manners, the length of the search window can be configured flexibly and the flexibility of correlation operation can be improved. In addition, since the write, read (including reading on new line of the memories) and correlation operation are unrelated to each other in the above processing, the processing will not pause when a user handover occurs, thus the object of seamless handover can be achieved.

### Brief Description of the Drawings

Fig. 1 is a flow chart of a method for implementing chip correlation for multi-path search according to the method embodiments of the present invention;
Fig. 2 is a schematic diagram of the principles of carrying out correlation operation on a plurality of chip groups in the method for implementing chip correlation for multi-path search according to the method embodiments of the present invention;
Fig. 3 is a schematic diagram of the principles of carrying out chip jumping in the method for implementing chip correlation for multi-path search according to the method embodiments of the present invention;
Fig. 4 is a schematic diagram of the principles of carrying out rotation (cyclic shift) on the data in the method for implementing chip correlation for multi-path search according to the method embodiments of the present invention;
Fig. 5 is a schematic diagram of the principles of carrying out complex multiplication on a single-chip and a PN code in relevant art;
Fig. 6 is a schematic diagram of the principles of carrying out complex multiplication on a single-chip and a PN code in the method for implementing chip correlation for multi-path search according to the method embodiments of the present invention;
Fig. 7 is a schematic diagram of the principles of carrying out complex multiplication and addition on the I branch (or I path) of data code in 8 chips in the method for implementing chip correlation for multi-path search according to the method embodiments of the present invention;
Fig. 8 is a processing schematic diagram of a method for implementing chip correlation for multi-path search according to the method embodiments of the present invention; and
Fig. 9 is a structural block diagram of an apparatus for implementing chip correlation for multi-path search according to the embodiments of the present invention.

### Detailed Description of Embodiments

Regarding the problem in relevant art that the costs of memories required by the implementation of multi-path search are high and the implementation thereof is hard, the present invention proposes a solution for implementing chip correlation for multi-path search, in which chip data are stored according to the receiving order of the chip, and the chip data which are related with the correlation operation carried out within one clock period are read out from a memory array and divided into multiple groups, then the correlation is carried out on a PN sequence with the chip group on which the correlation needs to be carried out within this period, so as to avoid the problem in relevant art that the costs of the chip are rather high when a large number of memories are used, which can effectively reduce the implementation complexity and difficulty of the hardware.

Hereinafter, the embodiments of the present invention will be described in detail in conjunction with the accompanying drawings.

In this embodiment, a method for implementing chip correlation for multi-path search is provided.

When the method is implemented according to this embodiment, a memory array should first be configured, and the number of memories in the memory array meets the following condition: x = m + n, wherein x is the number of memories in the memory array, n is the number of groups of the chip data processed within each clock period, and m is the number of the chip data in each group of chips.

Moreover, the search capability of the searcher is represented in the present invention as the maximum requirement of completing the data correlation of how many chips within each clock period, assuming that data correlation of M chips are completed within each clock period; the correlation of M chips are divided into K groups in each of which there are the correlation of L chips, wherein M = K x L, then the number of independent memories in the designed memory array is K + L. The width of each memory in the memory array is decided by the preciseness of the chip data, and the depth thereof is decided by factors such as the number of antennae of the RAKE receiver, the size of the search window, the size of the value K + L and so on.

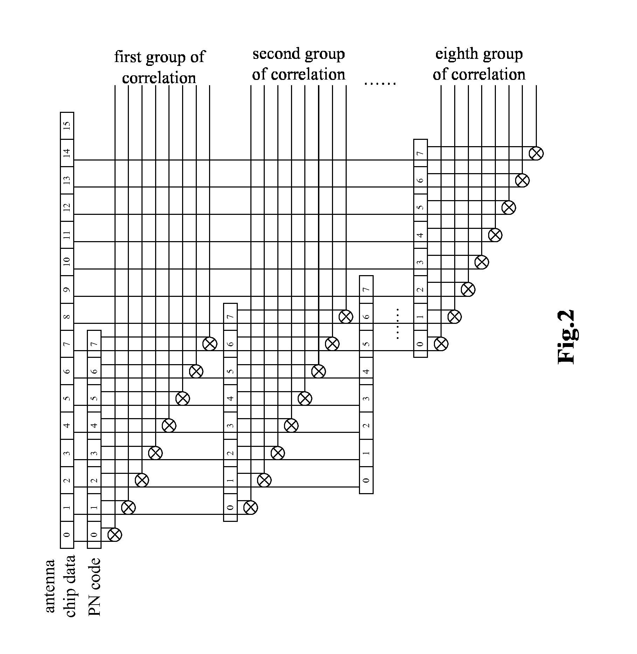

For example, assuming that 64-times chip rate is used as the system clock, then the data correlation operation of 64 chips needs to be completed within each system clock, the data correlation of 64 chips can be divided into 8 groups in each of which there are 8-chips correlation (it can also be 4 groups in each of which there are 16-chips correlation or 2 groups in each of which there are 32-chips correlation). As shown in Fig. 2, at this moment, the antenna data, which are related with the correlation operation carried out within one clock period, are the antenna data of 15 chips, therefore the memory array needs to include 15 independent memories. Taking the implementation requirements into account, the independent memories can be increased from 15 independent memories to 16 independent memories, so as to ensure that the operation address meets an integral power of 2 for the subsequent writing and reading operations.

When the chip data are written into the memory array, the memories in the memory array can be numbered sequentially as 0, 1, 2, ..., K + L - 1, and it is assumed that each memory stores the chip data of J chips, the storage locations of J chips are numbered as 0, 1, ..., J - 1 respectively; according to the current system timing, the received chip data are stored into the memories in the memory array sequentially, circularly and repeatedly. For example, according to the current system timing, the m-th chip data is written into the j-th chip location of the k-th memory, then the writing location of the received (m + 1)-th chip data is: (1) when k + 1 is less than K + L, it is written into the j-th chip location of the (k + 1)-th memory; (2) when k+1 is equal to K + L and j + 1 is less than J, it is written into the (j + 1)-th chip location of the 0-th memory; and (3) when k + 1 is equal to K + L and j + 1 is equal to J, it is written into the 0-th chip location of the 0-th memory.

When reading the chip data, it can be assumed that this location is the j-th chip location of the k-th memory according to the chip initial location of a search task within the current clock period, then the outputted chip data which are read out are: (1) the k-th to (K + L - 1)-th memories output the chip data of the j-th chip location of each memory; (2) when k is not equal to 0 and j + 1 is not equal to J, the 0-th to the (k-1)-th memories output the chip data of the (j+1)-th chip location of each memory; and (3) when k is not equal to 0 and j + 1 is equal to J, the 0-th to (k - 1)-th memories output the chip data of the 0-th chip location of each memory.

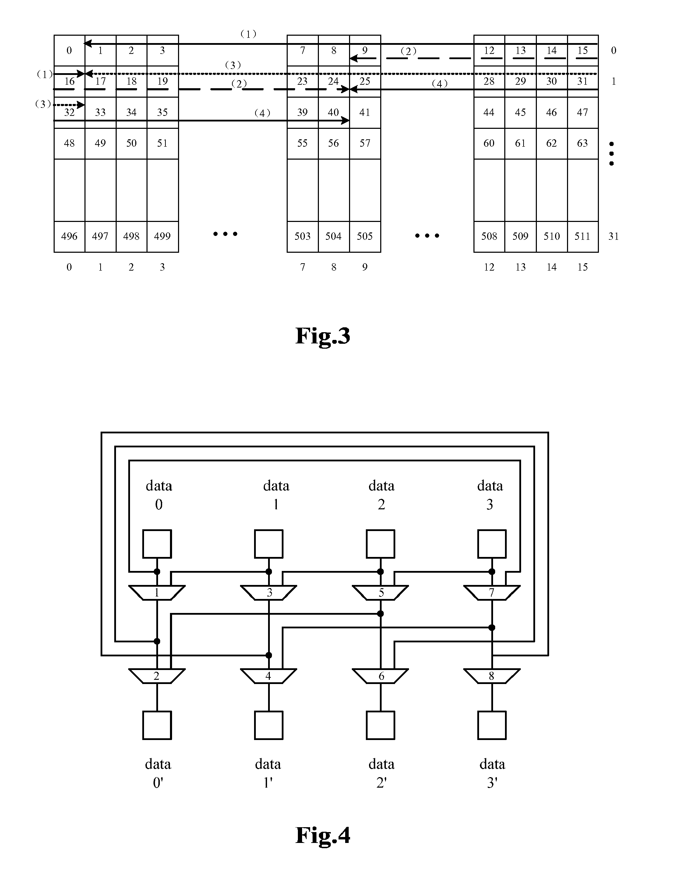

During the practical application, after the scale of the memory is determined, the storage locations of multiple memories in the memory array can be identified. For example, as shown in Fig. 3, the lower numerals 0 to 15 are the serial numbers of 16 independent memories, assuming that the antenna data of 512 chips are stored in the memory array, then each memory needs to store the antenna data of 32 chips, therefore the storage locations of the 512 chips in the memory array can be identified using 0-511.

In this way, during subsequent writing, assuming that all the storage locations in the memory array do not store chip data, then the first received chip data is stored into the storage location with the serial number 0 in the memory with the serial number 0, the second received chip data is stored into the first storage location in the memory with the serial number 1, i.e. the storage location with the serial number 1. After the received sixteen chip data is stored into the storage location with the serial number 15 in the memory with the serial number 15, the next received chip data is stored into the second storage location in the memory with the serial number 0, i.e. the storage location with the serial number 16, and so on. After the last storage location of the last memory is stored with a chip data, the next chip data is stored into the storage location with the serial number 0 of the memory with the serial 0 to overlap the previously stored chip data, and then the next round of storage is carried out.

Thus, it is ensured that the chip data stored in the memory array are the latest chip data, and during subsequent reading, it needs to sequentially read multiple chip data according to the location of the chip data which currently needs to be read out in the memory array. For example, in the memory array structure shown in Fig. 3, assuming that the reading is from the storage location 1, 16 chip data are read out. In this way, the stored chip data will be read out sequentially from the read storage locations 1, 2, 3, 4, 5, 6, 7, 8, 9, 10, 11, 12, 13, 14, 15, and 16.

Hereinafter, the method for implementing chip correlation for multi-path search according to this embodiment will be described on the basis of the above reading and writing mechanism.

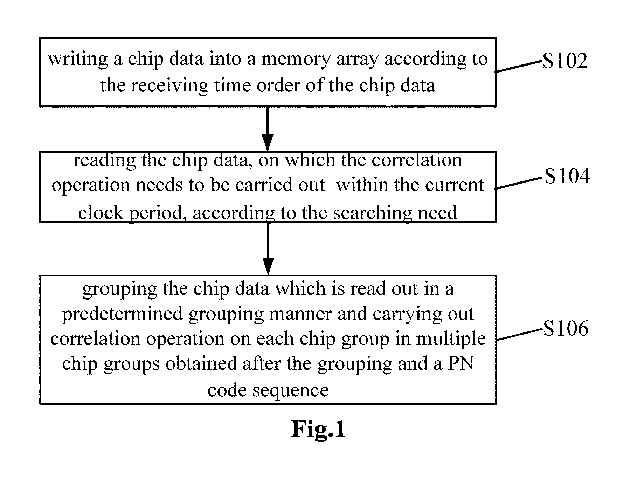

As shown in Fig. 1, the method for implementing chip correlation for multi-path search according to this embodiment comprises:
Step S102: a chip data is written into the memory array according to the receiving time order of the chip data; based on the above writing mechanism, when the memory array stores the antenna data of 512 chips, i.e. antenna data of 2 symbols and according to the system timing counter (GlbCnt), the antenna data when GlbCnt is equal to 0 chip can be stored into location 0 of the memory array, the antenna data when GlbCnt is equal to 1 chip can be stored in location 1 of the memory array, and so on, the antenna data when GlbCnt is equal to 511 chips can be stored into location 511 of the memory array, so as to complete the first cycle of writing the data into the memory array. In the following, the antenna data when GlbCnt is equal to 512 chips is stored into location 0 of the memory array, the antenna data when GlbCnt is equal to 513 chips is stored into location 1 of the memory array, and so on, the antenna data when GlbCnt is equal to 1023 chips is stored into location 511 of the memory array, so as to complete the second cycle. And so on, the subsequent series of cycle are completed;
Step S104: the chip data on which the correlation operation needs to be carried out within the current clock period is read out from the memory array according to the search demand; and
Step S106: the chip data which is read out are grouped in a predetermined grouping mode and the correlation operation is carried out on a PN code sequence and each chip group of the multiple chip groups obtained by the grouping; wherein the chip data of each chip group of the multiple chip groups are multiple chip data which are received consecutively, the number of the chip data in each chip group is equal to each other, and the second chip data of each chip group is the first chip data of the next chip group according to the receiving time order of the chip data.

In step S106, taking that 64-times chip rate is used as the system clock and the data correlation operation of 64 chips needs to be completed within each system clock as an example, the data correlation of 64 chips can be divided into 8 groups in each of which there are 8-chips correlation; as shown in Fig. 2, the number of chips related with the correlation operation carried out each time is 15. It is assumed that the chip correlation is carried out from storage location 0. After the grouping is carried out, the first group of correlated chip data are chip data stored in storage locations 0 to 7, the second group of correlated chip data are chip data stored in storage locations 1 to 8, the third group of correlated chip data are chip data stored in storage locations 2 to 9, the fourth group of correlated chip data are chip data stored in storage locations 3 to 10, the fifth group of correlated chip data are chip data stored in storage locations 4 to 11, the sixth group of correlated chip data are chip data stored in storage locations 5 to 12, the seventh group of correlated chip data are chip data stored in storage locations 6 to 13, the eighth group of correlated chip data are chip data stored in storage locations 7 to 14 (here, the length of the search window in 8, and if the grouping mode is changed to be four groups in each of which there are sixteen chips, then the length of the search window is changed to be 16).

It can be seen from Fig. 2 that by virtue of the above processing, a small number of memories can be used to complete correlation operation by way of grouping the chip data on which the correlation operation needs to be carried out within one clock period, thus the memory resources can be effectively saved, the costs and the hardware complexity can be reduced. Moreover, due to various grouping modes, the length of the search window can be configured flexibly and the flexibility of correlation operation can be improved. In addition, since the writing, reading (including linefeed reading of the memories) and correlation operation are unrelated to each other in the above processing, the processing will not pause when a user handover occurs, thus the object of seamless handover can be achieved.

Moreover, in the above processing, the chip data related with the correlation operation within one clock period will be read out simultaneously and sent into 8 correlation devices which are used for carrying out correlation operation simultaneously, and these 8 correlation devices carry out correlation operation in parallel and output the result.

After the correlation operation within the current period is completed, the next chip data of a designated chip data of the chip data on which the correlation operation is carried out within the current clock period is used as the first chip data of the first chip group on which the correlation operation is carried out within the next clock period, wherein the designated chip data is the first chip data of the last chip group in multiple chip groups.

That is to say, after the correlation operation shown in Fig. 2 is completed, the chip data, stored in the locations from 0 to 7, of the chip data related to the correlation operation and stored in the location from 0 to 14 are the initial chip data of these 8 chip groups. When the correlation operation is carried out during the next period, since the correlation operation has been carried out on the chip data stored in the locations from 0 to 7, it needs to carry out the correlation operation within the next clock period on 15 chip data (i.e. the chip data stored in the storage locations from 8 to 22) starting from the next chip data of the chip data stored in the last storage location 7.

Moreover, during the reading of the chip data in the memory within each clock period, as shown in Fig. 3, it is assumed as follows: in the first period, the chip data in the storage locations 1 to 16 are read out and the correlation operation for the chip data stored in storage locations 1 to 8 is completed; in the second period, the chip data in the storage locations 9 to 24 are read out and the correlation operation for the chip data stored in storage locations 9 to 16 is completed; in the third period, the chip data in the storage locations 17 to 32 are read out and the correlation operation for the chip data stored in storage locations 17 to 25 is completed; in the fourth period, the chip data in the storage locations 25 to 40 are read out and the correlation operation for the chip data stored in storage locations 25 to 32 is completed.

During this process, such as following processes are needed: it is needed to read out the chip data stored in storage location 16 after the chip data stored in storage location 15 has been read out and it is needed to read out the chip data stored in storage location 32 after the chip data stored in storage location 31 has been read out. The shift rotation can be carried out on the output of the multiple memories by an operation of choosing one from more than one with one-level in this embodiment. Preferably, the cyclic shift can be carried out on the output of the multiple memories by an operation of choosing one from more than one with two-levels.

In this case, grouping the chip data which is read out corresponds to carry out cyclic shift operation on the chip data, wherein the particular mode is as follows: according to the number of the chip data which need cyclic shift, wherein the number ranges from 0 to K + L - 1, it does not need the cyclic shift when the number is 0, and an anticlockwise cyclic shift of 1 chip data is performed when the number is 1, and the like, when the number is K + L - 1, an anticlockwise cyclic shift of K + L - 1 chip data is performed; and assuming that it totally needs to cycle s chips, here when the cyclic shift is performed, a two-levels cycle method is used, wherein the first level carries out the cyclic shift in E chips and the second level carries out cyclic shift of F chips on the chip data outputted by the first level cyclic shift, then the following is met: s = E x F.

For example, Fig. 4 shows the process of carrying out cyclic shift on the output of four memories by an operation of choosing 1 from 2 with two-levels. As shown in Fig. 4, an operation module 1 of choosing one from more than one in the figure can select data 0 or 1 as the output of the first level, an operation module 3 of choosing one from more than one can select data 1 or 2 as the output, an operation module 5 of choosing one from more than one can select data 2 or 3 as the output, an operation module 2 of choosing one from more than one can select the output data of the operation module 5 of choosing one from more than one or the operation module 1 of choosing one from more than one, that is to say, data 0' can be any one of data 0 to 3 which are initially inputted, so as to achieve the purpose of complete rotation. Similarly, by virtue of the operation modules 1 to 8 of choosing one from more than one, data 1', 2', and 3' can also be the data after the complete rotation.

Moreover, as to each multi-chooser, how to select the inputted data can be indicated by a bit signal. For example, as to the operation modules 1 and 2 of choosing one from more than one, they can be indicated by two bits, for example, they can be indicated by "01", wherein the first bit "0" indicates the operation module 1 of choosing one from more than one to select data 0 at left side as the input, the second bit "1" indicates the operation module 2 of choosing one from more than one to select the output of the operation module 5 of choosing one from more than one at right side as the input, correspondingly, if the one from more operation modules 1 and 2 select according to the indication of "01 ", then correspondingly, as to the one from more operation modules 3 and 4, one from more operation modules 5 and 6, one from more operation modules 7 and 8 also carry out indication via "01", so that the finally outputted data 0', 1', 2', and 3' are data after the cyclic shift.

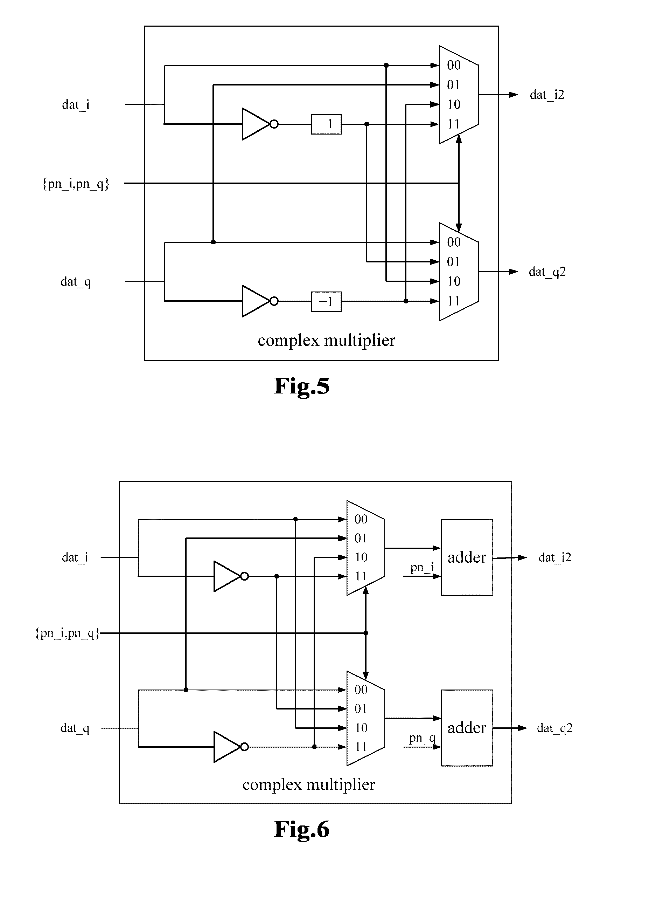

In addition, when the correlation operation is carried out on the chip data, it needs to carry out complex correlation on the PN code with the antenna data (chip data) outputted by the data rotation module. For example, a complex multiplication apparatus shown in Fig. 5 can be used, wherein it needs to carry out +1 (adding 1) operation on dat_i and dat_q respectively and finally output dat_i2 and dat_q2. It can be seen from Fig. 5 that as to I path of chip, for pn_i, the output result needs the +1 operation. Therefore, the +1 operation in Fig. 5 preferably can be shifted to be performed after the selector so as to obtain the transformation form shown in Fig. 6.

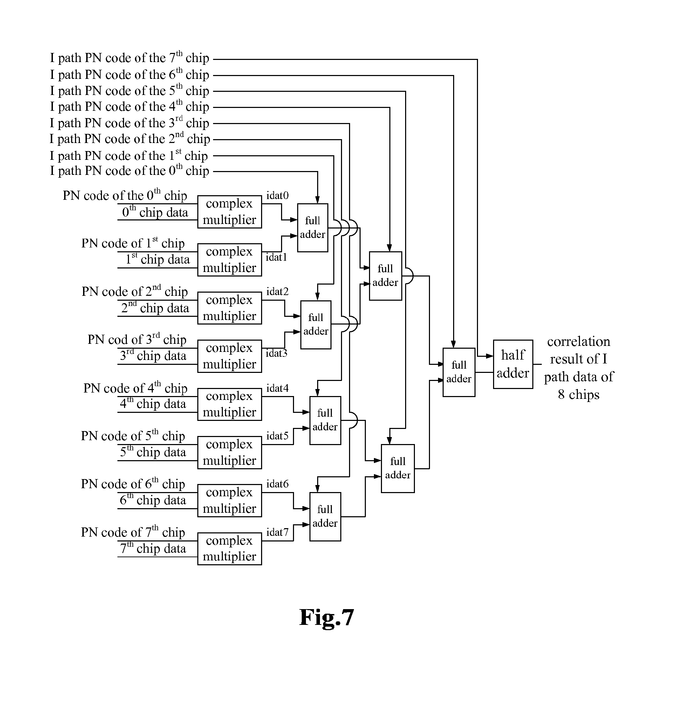

As shown in Fig. 6, the adder tree of the multi-chips and the complex multiplier can be combined to obtain an implementation manner of the correlation of the data of multi-chips with the PN code. The 8-chips data correlation of data correlation method which uses this manner is as shown in Fig. 7, wherein this method shifts the +1 operation in the negating one number and +1 operation which needs to be carried out during complex multiplication into the adder tree for the multi-chips accumulation as a carry signal of the adder in the adder tree.

That is to say, the structure based on Fig. 5 can be improved. In particular, when carrying out the complex multiplication and accumulation, the complex multiplication is carried out on each chip data in the chip group with a corresponding PN code in the PN code sequence to obtain I path data and Q path data of a single chip, and the adding 1 operation in the negating one number and adding 1 operation in the complex multiplication structure is placed in the accumulation operation of the multi-chips; and then the accumulation of the multi-chips is carried out on the I path data, and the adding 1 operation in the single-chip complex multiplication is taken as a carry of an adder in the multi-chips accumulation while carrying out the accumulation; and at the same time the accumulation of the multi-chips is carried out on the Q path data, and the adding 1 operation in the single-chip complex multiplication is taken as a carry of the adder in the multi-chips accumulation while carrying out the accumulation.

In particular, in Fig. 7, after the complex multiplier has carried out complex multiplication on the PN code of 0-th chip, the data of 0-th chip, the PN code of 1-st chip, the data of 1-st chip, the PN code of 2-nd chip, the data of 2-nd chip, ..., the PN code of 7-th chip and the data of 7-th chip, an accumulation is carried out on the complex multiplication results idat0, idat1, idat2, idat3, idat4, idat5, idat6, idat7 and the I path PN code of the 0-th to 7-th chip by a full adder and a half adder to finally obtain the correlation result of the I path chip data of 8 chips. As to the Q path of data, the similar method can be used to obtain the correlation result of the Q path chip data of 8 chips. In this way, the number of adders can be effectively reduced, which makes the implementation of the hardware simpler.

Hereinafter, the method for implementing chip correlation for multi-path search according to the present invention will be described in conjunction with particular examples.

Hereinafter, the description will be carried out by assuming for example that 64-times chip rate is used as the system clock and it needs to complete the data correlation operation for 64 chips within each system clock.

The structure configuration of the memory array is as follows: since it needs to complete the data correlation for 64 chips within each clock, here the data correlation of 64 chips is divided into 8 groups in which each of there are 8-chips correlation, and thus as shown in Fig. 2, the antenna data required are the antenna data of 15 chips. Therefore, the antenna data memory array needs 15 independent memories. Taking the implementation requirements into account, it can be changed from the 15 independent memories to 16 independent memories. Assuming that the antenna data of 512 chips are stored in the antenna memory array, then each memory needs to store the antenna data of 32 chips, and the location in the memory array of these 512 chips are identified with number 0-511, as shown in Fig. 3. When the system supports multi-antenna data stream, each chip in the 512 chips in Fig. 3 can store one chip data in multi-antenna data, i.e., performing the storage firstly according to the chip, the chip data of different antenna are differentiated in each chip; and each chip in Fig. 3 can store the chip data from the same antenna, i.e., performing the differentiation and storage according to the antenna, and chips are then differentiated in each antenna.

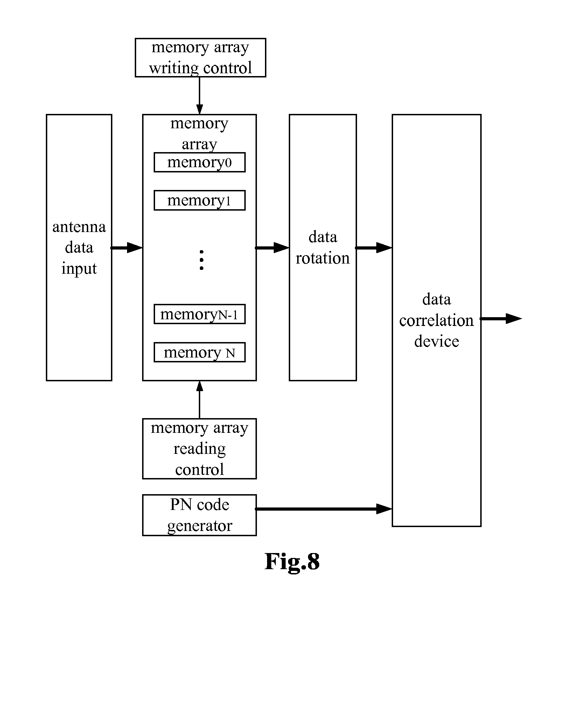

As shown in Fig. 8, in first step, the antenna data input from the front end is written into the antenna data memory array according to the system time. In particular, the memory array writing control can generate the writing address of the memory array according to the system timing, wherein the writing address is the same for each memory in the memory array, a writing enabling is used to differentiate which memory in the memory array they are written into; then a writing enabling signal of each memory in the memory array is generated according to the system timing, and the antenna data are written into a corresponding address unit of the memory the writing enabling input of which is effective.

When performing the writing, the writing control method for the memory array is as follows: the writing control method is designed according to a system timing counter (GlbCnt) and the structure of the memory array. As the previous memory configuration, the memory array stores the antenna data of 512 chips, i.e. antenna data of 2 symbols, the antenna data when GlbCnt is equal to 0 chip can be stored into the location 0 of the memory array, and the antenna data when GlbCnt is equal to 1 chip can be stored in the location 1 of the memory array, and so on, the antenna data when GlbCnt is equal to 511 can be stored into the location 511 of the memory array, so as to complete the first cycle of the data writing of the memory array. After the first cycle is completed, in the following, the antenna data when GlbCnt is equal to 512 is stored into the location 0 of the memory array, the antenna data when GlbCnt is equal to 513 is stored into the location 1 of the memory array, and so on, antenna data when GlbCnt is equal to 1023 is stored into the location 511 of the memory array, so as to complete the second cycle. And so on, the subsequent series cycles are completed. Thus, the antenna data are sequentially written into the memory array according to the system timing counter and the structure of the memory array.

in second step, the required antenna data can be read out from the memory array according to an input control signal which is inputted into the memory array reading control. In particular, firstly, a group reading address in the memory array is generated according to the input control signal which is inputted into the memory array reading control, then a reading address group selection signal of each memory in the memory array is generated according to the input control signal which is inputted into the memory array reading control, each memory in the memory array obtain the reading address thereof according to the group selection signal, and at last, a reading enabling signal of the memory array is generated according to the input control signal which is inputted into the memory array reading control and the reading data of each memory in the memory array are output.

In this case, when performing the reading from the memory array, the memory array reading control method will relate to the control information of several aspects, including control information such as the initial chip data of the user, searching window count, correlation count, antenna number, etc., and the memory array reading control logic obtains the reading initial location of each correlation operation according to these control information, and then decides the reading address of each memory in the memory array according to the reading initial location, thus the corresponding antenna data are read out from the memory array.

In third step, the cyclic shift is carried out on the antenna data, which are outputted from the antenna data memory array, according to a control signal which is inputted into the data rotation module (as shown in Fig. 8, the cyclic shift is carried out on the data of memory 0 to memory N in the memory array) to obtain the antenna data having been shifted. In this case, the number of cyclic shift which the data rotation module will implement can be graded according to the number of memories in the memory array, and an intra-grading cyclic shift is first carried out on the data according to the grading results, then an inter-grading cyclic shift is carried out, and finally the antenna data having been cyclic shifted are obtained and outputted, i.e. such as the method shown in Fig. 4, taking the cyclic shift of 4 data as an example, the cyclic shift of 4 data is divided into the form of 2-grade 2 x 2, the first grade carries out the cyclic shift of 2 data, the second grade further carries out the cyclic shift of 2 data on the basis of the first grade cyclic shift, the particular process of which has been described in the above, which will not be described here.

In the fourth step, a complex correlation operation is carried out on the antenna data from the data rotation module with the PN code of the PN generator, then complex accumulation between(or among) multi-chips is carried out to obtain the correlation result of multi-searching window offset location.

In this case, it needs to carry out complex correlation operation on the antenna data from the data rotation module with the PN code of the PN generator to obtain the correlation result of single-chip, and accumulation is carried out on the correlation result of more than one single-chip to obtain the correlation result of the multi-searching window offset location.

As to the correlation of PN code and antenna data, preferably, complex multiplication and multi-chips accumulation can be taken into account together. The adding 1 operation in Fig. 5 is shifted after the selector. Since only pn_i is required as to the I path, then the output result needs the adding 1 operation, thus obtaining the transformation form in Fig. 6. The complex multiplier and the adder tree of multi-chips in Fig. 6 can be combined to obtain an implementation of the correlation of the data of multi-chip and PN code, and the 8-chips data correlation of data correlation method which uses this mode is as shown in Fig. 7, which method shifts the adding 1 operation in the negating one number and adding 1 operation which needs to be carried out during complex multiplication into the adder tree of the subsequent multi-chip accumulation as a carry (bit) signal of the adder in the adder tree.

In relevant art, the flexibility of the correlation operation is reduced due to the use of fixed searching window, and when handover occurs between users, invalid correlation calculation will be introduced, which cause waiting, and it needs to cache a large number of antenna data, while the user of the searching window according to the above processing of the present invention can be changed flexibly, and the used memory resources can be reduced and the implementation complexity of hardware can be reduced (the number of memories and the number of logic devices such as adder are reduced); since there is no correlation between the steps of the above processing of this embodiment, even a user handover occurs, it will not cause waiting and can achieve seamless handover.

In this embodiment, an apparatus for implementing chip correlation for multi-path search is provided.

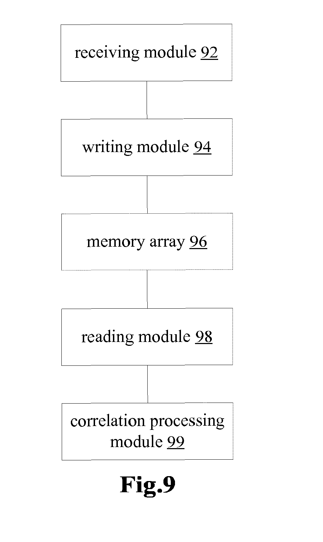

Fig. 9 is a structural block diagram of an apparatus for implementing chip correlation for multi-path search according to the method embodiments of the present invention. As shown in Fig. 9, the apparatus for implementing chip correlation for multi-path search according to this embodiment comprises: a receiving module **92,** a writing module **94,** a memory array **96,** a reading module **98,** and a correlation processing module **99,** and hereinafter the above structures will be described in detail:
the receiving module **92** is configured to receive a chip data from an antenna;
the writing module **94** is connected to the receiving module **92** and is configured to write the chip data into a memory array according to the receiving time order of the chip data received by the receiving module **92;**
the memory array **96** is connected to the writing module **94** and is configured to store the chip data written by the writing module **94;**
the reading module **98** is connected to the memory array **96** and is configured to read the chip data on which the correlation operation needs to be carried out within a current clock period from the memory array **96** according to the searching need; and
the correlation processing module **99** is connected to the reading module **98** and is configured to group the chip data, which are read out by the reading module **98,** in a predetermined grouping manner and carry out correlation operation on each chip group of the multiple chip groups obtained by the grouping and a PN code sequence; wherein the chip data of each chip group of the multiple chip groups are multiple chip data which are received consecutively, the number of the chip data in each chip group is equal to each other, and the second chip data of each chip group is the first chip data of the next chip group according to the receiving time order of the chip data.

When writing and reading the chip data, the manner described above can also be used. When the correlation processing module carries out the grouping, the manner shown in Fig. 4 can also be used to perform the rotation of the chip data, and the manners shown in Figs. 5, 6, or 7 are used to carry out complex multiplication and adding 1 operation. The operating process and operating principles of the apparatus according to this embodiment have been described in detail in the method portion, which will not be described here redundantly, the description of the corresponding portion in the method can be referred to.

By virtue of the above preferred embodiments, by way of grouping the chip data on which the correlation operation needs to be carried out within one clock period, a small number of memories can be used to complete the correlation operation, thus the memory resources can be effectively saved, the costs and the hardware complexity can be reduced; moreover, due to various grouping manners, the length of the searching window can be configured flexibly and the flexibility of the correlation operation can be improved; in addition, since the writing, reading (including linefeed reading of the memories) and the correlation operations are unrelated to each other in the above processing, the processing will not pause when user handover occurs, thus the purpose of seamless handover can be achieved.

Above description is only to illustrate the preferred embodiments but not to limit the present invention. The scope defined in claims shall comprise any modification, equivalent substitution and improvement within the principle of the present invention.

## Claims

1. A method for implementing chip correlation for multi-path search, **characterized by** comprising:
writing a chip data into a memory array according to receiving time order of the chip data;
reading the chip data, which correlation operation is needed to be carried out on within a current clock period, from the memory array according to a demand of the search; and
grouping the chip data which is read out by a predetermined grouping manner and carrying out correlation operation on each chip group in the multiple chip groups obtained by the grouping and a pseudo-noise (PN) code sequence; wherein the chip data of each chip group in the multiple chip groups are multiple chip data which are received consecutively, the number of the chip data in each chip group is equal to each other, and the second chip data of each chip group is the first chip data in the next chip group according to the receiving time order of the chip data.

2. The method for implementing chip correlation according to Claim 1, **characterized in that** the step of writing a chip data into a memory array according to the receiving time order of the chip data comprises:
as to each memory in multiple memories of the memory array, after a chip data is written into a storage location of the memory, writing next received chip data into a storage location in a next memory of the memory, wherein the relevant location of the storage location in the next memory is same as that of the storage location in the memory; and
after a chip data is written into a storage location in the last memory of the multiple memories, taking the first memory in the multiple memories as a next memory of the last memory and writing next received chip data into a next storage location of the storage location the relevant location of which is the same in the first memory.

3. The method for implementing chip correlation according to Claim 2, **characterized in that** as to each memory in the multiple memories, after the storage space of the memory is filled up, if a new chip data which needs to be stored in the memory is received continuously, then the chip data which is stored earliest in the memory is covered by the new chip data.

4. The method for implementing chip correlation according to Claim 2, **characterized in that** the step of reading the chip data which the correlation operation is needed to be carried out on within a current clock period comprises:
reading the chip data which the correlation operation is needed to be carried out on within a current clock period from the memory array according to the order of the multiple memories and the order of the storage location in the each memory, wherein within each clock period, one data is read out from each memory in the multiple memories respectively.

5. The method for implementing chip correlation according to Claim 1, **characterized in that** the step of grouping the chip data which is read out by a predetermined grouping manner comprises: carrying out two-level cyclic shift on the chip data which is read out, wherein the first level cyclic shift is used for carrying out cyclic shift of E chip on the chip data which is read out, and the second level cyclic shift is used for carrying out cyclic shift of F chip on the chip data after the first level cyclic shift, and S = E x F, wherein S is the total number of chip data which need to be cycled.

6. The method for implementing chip correlation according to Claim 1, **characterized in that** the predetermined grouping manner is to group the chip data which the correlation operation is needed to carried out on within the each clock period according to the following formula: Y = m * n, wherein Y is the number of the chip data which the correlation operation is needed to be carried out on within the each clock period, n is the number of groups divided for the chip data processed within each clock period according to the predetermined grouping manner, m is the number of the chip data in each group of chip data, m and n are integral power of 2, and the number of memories in the memory array meets the following condition: x = m + n, wherein x is the number of memories in the memory array.

7. The method for implementing chip correlation according to Claim 1, **characterized in that** the step of carrying out correlation operation on the each chip group and the PN code sequence comprises:
carrying out complex multiplication on each chip data in the chip group and a corresponding PN code in the PN code sequence to obtain I path data and Q path data of a single-chip, and placing the adding 1 operation in the negating one number and adding 1 operation in the complex multiplication structure into an accumulation operation of a multi-chip; and
carrying out multi-chip accumulation on the I path data, and taking the adding 1 operation in the single-chip complex multiplication as a carry bit of an adder in the multi-chip accumulation while carrying out the accumulation; and at the same time carrying out accumulation on the Q path data and taking the adding 1 operation in the single-chip complex multiplication as a carry bit of an adder in the multi-chip accumulation while carrying out the accumulation.

8. The method for implementing chip correlation according to Claim 1, **characterized by** further comprising:
in the case that it is determined according to the size of a search window that it is needed to continue to carry out chip correlation in the search window within the next clock period after correlation operation has been carried out on the each chip group and the PN code sequence , taking the next chip data of a designated chip data in the chip data which the correlation operation is carried out on within the current clock period as the first chip data of the first chip group which correlation operation is carried out on within the next clock period, wherein the designated chip data is the first chip data of the last chip group in the multiple chip groups.

9. An apparatus for implementing chip correlation for multi-path search, **characterized by** comprising:
a write module, configured to write a chip data into a memory array according to a receiving time order of the chip data;
a memory array, configured to store the chip data written by the write module;
a read module, configured to read the chip data, which correlation operation is needed to be carried out on within a current clock period, from the memory array according to a demand of the search; and
a correlation processing module, configured to group the chip data which is read out by a predetermined grouping manner and carrying out correlation operation on each chip group in the multiple chip groups obtained by the grouping and a PN code sequence; wherein the chip data of each chip group in the multiple chip groups are multiple chip data which are received consecutively, the number of the chip data in each chip group is equal to each other, and the second chip data of each chip group is the first chip data in the next chip group according to the receiving time order of the chip data.

10. The apparatus for implementing chip correlation according to Claim 9, **characterized in that** the write module is configured to, as to each memory in multiple memories of the memory array, write next received chip data into a storage location in a next memory of the memory, after a chip data is written into a storage location of the memory, wherein the relevant location of the storage location in the next memory is same as that of the storage location in the memory; and after a chip data is written into a storage location in the last memory of the multiple memories, to take the first memory in the multiple memories as a next memory of the last memory and to write next received chip data into a next storage location of the storage location the relevant location of which is the same in the first memory.
